# EUROPEAN PATENT SPECIFICATION

(11) **EP 1 495 067 B1**
(45) Date of publication and mention of the grant of the patent: **30.05.2007**
(21) Application number: 03723549.6
(22) Date of filing: 17.04.2003
(51) Int. Cl.: C08J 3/28, B29B 13/08, B29B 7/30

(54) **A PROCESS FOR RADIATION TREATMENT OF ETHYLENE POLYMERS**
VERFAHREN ZUR STRAHLENBEHANDLUNG VON ETHYLENPOLYMEREN
PROCEDE DE RADIOTHERAPIE DE POLYMERES D'ETHYLENE

(30) Priority: 18.04.2002 SE 0201173
(43) Date of publication of application: 12.01.2005
(73) Proprietor: Borealis Technology Oy, 06101 Porvoo (FI)
(72) Inventor: EK, Carl-Gustaf, S-426 58 Västra Frölunda (SE); BÄCKMAN, Mats, S-416 51 Göteborg (SE); MARTINSSON, Hans-Bertil, S-472 95 Varekil (SE)
(74) Representative: Stenbäck, Maria Elisabeth
(86) International application number: PCT/SE2003/000623
(87) International publication number: WO 2003/087199

(56) References cited:
- EP-A2- 0 047 171
- WO-A1-97/47682
- WO-A1-98/34986
- WO-A1-99/51649
- US-A- 3 563 870
- US-A- 4 586 995
- US-A- 4 598 128
- US-A- 5 508 319
- US-A- 5 552 104
- US-A- 6 103 807

## Description

### Field of the invention

The present invention relates to a process for radiation treatment of ethylene polymers.

### Technical background

Multimodal polyethylene materials are in many respects superior to corresponding monomodal materials. Multimodal polyethylene materials and more particularly bimodal polyethylene materials have a widespread and increasing use as materials for various applications such as pipes, wires and cables, films, blow moulded Household & Industrial Containers (HIC), large piece blow moulded articles, injection moulded articles, etc.

However, being a blend of different polymer fractions multimodal ethylene polymers are also intrinsically inhomogenous. While this inhomogeneity may be accepted for some applications, it is a disadvantage for other more demanding applications such as those mentioned above. The main problem is that there is a conflict between, on the one hand the homogeneity level of the ethylene polymer material, and on the other hand the processing properties as well as the mechanical properties of the ethylene polymer material.

By way of example it may be mentioned that the inhomogeneity of multimodal ethylene polymer material for pipes tends to manifest itself in coloured materials as white dots. These white dots in the material are remaining undispersed parts of the high molecular weight fraction. If the material is homogenised by compounding the material to eliminate these white dots, the mechanical properties suffer. Examples of impaired mechanical properties are the impact properties, notch resistance, rapid crack propagation, pipe pressure resistance, and constant tensile load properties. Also the processing properties suffer and pipes prepared of the material tend to display surface defects and fluctuations during manufacturing as well as display undesired sagging during pipe extrusion, especially for large diameter pipes.

As a further example wire and cable products such as slotted cores for telecommunication cables, insulating coatings for telesingel wires, cable jacketing materials and cellular coatings for wires often show a poor surface finish due to to the inhomogeneity of the multimodal material. If the material is homogenised to improve the surface finish various properties of the material deteriorate such as the melt elasticity, the melt strength, the shrinkage, the dimension stability, the line speed when processing the material, the cellular structure of foamed material, etc.

A still further example is the inhomogeneity of films made of multimodal ethylene polymer. This inhomogeneity manifests itself as so-called "gels" or fish eyes in the film. If the polymer material is homogenised to eliminate the gels the mechanical properties of the film such as dart drop, tear strength etc. deteriorates.

Still another example is blow moulded articles of multimodal ethylene polymer material where the elimination of the inhomogeneity of the polymer material leads to a reduced melt elasticity, swell properties exemplified as uneven wall thickness, high bottle weight and sometimes surface defects.

The abovementioned inhomogeneity problems are due to the insufficient blending of the low and high molecular weight fractions of the multimodal polymer material. The high molecular weight molecules or domains are known to be the most sensitive to the compounding conditions needed to achieve the desired or required degree of homogenisation. Thus, compounding of the multimodal polymer material to homogenise it to a desired level often destroys the high molecular weight domains by chain scission and consequently ruins the processing properties as well as the mechanical properties of the polymer material.

At present it is almost impossible to upgrade a product of multimodal ethylene polymer material that has been downgraded due to tough compounding conditions so that the high molecular weight domains are destroyed when the polymer is homogenised.

It is also very difficult at present to reach the desired levels of both the homogeneity and the mechanical and processing properties by adjusting or controlling these properties separately during manufacture of the polymer material. Nor is it possible to make such adjustment/control fast enough or with sufficient accuracy via the reactor parameters or at the compounding step to minimise the effect of variations in e.g. feed of material, etc.

In addition to the abovementioned problems it is not possible at present to tailor the high molecular weight fraction of the polymer material after homogenising/compounding the polymer material.

### Summary of the invention

It is an object of the present invention to alleviate or eliminate the above mentioned disadvantages and achieve a multimodal ethylene polymer with improved or superior characteristics regarding homogeneity combined with improved characteristics regarding the mechanical properties and processing properties.

According to the present invention it has been discovered that it is possible to first improve the homogeneity of a multimodal ethylene polymer by melt homogenisation/compounding and thereafter improve or restore the mechanical and processing properties of the polymer by irradiating the polymer with electron beam radiation.

More particularly, the present invention provides a process for radiation treatment of ethylene polymers, characterised in
providing a multimodal ethylene polymer;
melt homogenising/compounding the polymer;
irradiating the homogenised polymer as a solid with electron beam irradiation to increase the complex viscosity (η*) at 2.7 kPa complex modulus (G*), _{η(G*=2.7 kPa)} (herein referred to as η_{2.7 kPa} for short), determined according to ASTM D 4440-95a, of the polymer.

Further characterising features and advantages of the present invention will appear from the following description and the appended claims.

### Detailed description of the invention

As stated above the present invention relates to ethylene polymers. This is in contrast to other polyolefins, particularly propylene polymers. As disclosed in US-A-5,916,929 irradiation of polymer materials generally yields two types of substantially different products. Thus, ethylene polymers undergo molecular combination and eventually become crosslinked, while propylene polymers undergo polymer degradation by chain scission whereby the molecular weight is decreased. This means that if a multimodal propylene polymer that has undergone chain scission in connection with homogenisation by melt compounding subsequently is irradiated to restore the mechanical and processing properties of the polymer, the irradiation instead results in additional chain scission and further deterioration of the mechanical and processing properties. The distinction between irradiation of ethylene polymers and propylene polymers is therefore an important one.

The present invention further relates to multimodal ethylene polymers. The "modality" of a polymer refers to the form of its molecular weight distribution curve, i.e. the appearance of the graph of the polymer weight fraction as function of its molecular weight. If the polymer is produced in a sequential step process, utilizing reactors coupled in series and using different conditions in each reactor, the different fractions produced in the different reactors will each have their own molecular weight distribution. When the molecular weight distribution curves from these fractions are superimposed into the molecular weight distribution curve for the total resulting polymer product, that curve will show two or more maxima or at least be distinctly broadened in comparison with the curves for the individual fractions. Such a polymer product, produced in two or more serial steps, is called bimodal or multimodal depending on the number of steps. In the following all polymers thus produced in two or more sequential steps are called "multimodal". It is to be noted here that also the chemical compositions of the different fractions may be different. Thus one or more fractions may consist of an ethylene copolymer, while one or more other fractions may consist of ethylene homopolymer.

The multimodal polymer of the present invention can be produced in other ways than by polymerisation in two or more polymerisation reactors connected in series. Thus, the multimodal polymer may be produced by mechanical blending of two or more different individual polymers. It is not necessary that the individual polymers are virgin polymers. Instead the mechanical blend of polymers may include recycled polymer material so that at least one of the individual polymers is a recycled polymer such as polymer scrap.

The multimodal polymer of the present invention is a multimodal ethylene polymer, preferably a bimodal ethylene polymer. As a matter of definition, the expression "ethylene polymer" used herein comprises ethylene homopolymers as well as ethylene copolymers. "Ethylene homopolymers" relates to ethylene polymers that consist substantially, i.e. to at least 97% by weight, preferably at least 99% by weight, more preferably at least 99.5% by weight, and most preferably at least 99.8% by weight of ethylene and thus are HD ethylene polymers which preferably only includes ethylene monomer units. Further, "ethylene copolymer" relates to an ethylene polymer derived from polymerisation of ethylene and at least one other copolymerisable monomer, i.e. the expression also comprises terpolymers.

Preferred copolymerisable monomers for preparing ethylene copolymers used at the present invention are α-olefins having 3-20 carbon atoms, and more preferably the comonomers are selected from the group consisting of 1-butene, 1-hexene, 4-methyl-1-pentene, and 1-octene.

In addition to the polymer as such the expression "ethylene polymer" as used herein also comprises any conventional additives normally included in the polymer such as antioxidants, light stabilisers, etc. Such additives are usually utilized in an amount of less than 5 % by weight, preferably less than 2 % by weight, based on the total weight of the polymer.

As examples of antioxidants may be mentioned sterically hindered phenols such as pentaerythrityl-tetrakis(3-(3',5'-di-tert.butyl-4-hydroxyphenyl)-propionate, octadecyl 3-(3',5'-di-tert.butyl-4-hydroxyphenyl)propionate and C (1,3,5-tri-methyl-2,4,6-tris-(3,5-di-tert.butyl-4-hydroxyphenyl)benzene and phosphorous based antioxidants such as tris(2,4-di-t-butylphenyl)phosphite. Preferably, a combination of pentaerythrityl-tetrakis(3-(3'.5'-di-tert.butyl-4-hydroxyphenyl)-propionate and tris(2,4-di-t-butylphenyl)phosphite is used. The total amount of antioxidant of such a combination should be at least 0.10 % by weight, preferably at least 0.2 % by weight, and more preferably at least 0.3 % by weight. In the combination the phosphite antioxidant should comprise at least 20 % by weight, and preferably the phosphite antioxidant and the sterically hindered phenol antioxidant are combined in a weight ratio of about 1:1.

Due to possible surface oxidation during irradiation of the material, it is preferred to include inorganic or organic pigments or dyes (or UV absorbers etc) to secure the long term properties of the polymer material. Such pigments include for example carbon black, titanium dioxide, Cu-phtalocyanine blue pigments, disazo condensation pigments. The amount included is preferably at least 0.2 % by weight, more preferably at least 0.5 % by weight, most preferably at least 1.0 % by weight, such as about 2-5 % by weight of the ethylene polymer. The amount of about 2-5 % by weight is usually only used for carbon black.

Further, the ethylene polymer may comprise fillers in amount of up to 60 % by weight of the ethylene polymer.

The multimodal ethylene polymer preferably comprises a low molecular weight (LMW) ethylene homopolymer fraction and a high molecular weight (HMW) ethylene copolymer fraction. Depending on whether the multimodal ethylene polymer is bimodal or has a higher modality the LMW and HMW fractions may comprise only one fraction each or include sub-fractions, i.e. the LMW fraction may comprise two or more LMW sub-fractions and similarly the HMW fraction may comprise two or more HMW sub-fractions.

A preferred multimodal ethylene polymer to be processed by the process of the present invention is an ethylene polymer comprising a low molecular weight (LMW) ethylene homopolymer fraction and a high molecular weight (HMW) ethylene copolymer fraction. Preferably the LMW fraction has a weight average molecular weight (M_{w}) of 10 000-30 000 and the HMW fraction has a weight average molecular weight (M_{w}) of at least 100 x 10³.

The proportions of the LMW and HMW fractions (also known as the "split" between the fractions) may be varied within a wide range, but preferably the weight ratio of the LMW fraction to the HMW fraction should lie in the range (35-55) : (65-45), more preferably (40-60):(60-40), and most preferably (45-55) : (55-45). If the proportion of the HMW fraction becomes too great it results in low strength values and if it is too low it results in the formation of gels, when producing a polymer with a fixed M_{w} of the composition.

The first step of the process of the invention is to melt homogenise/compound the multimodal ethylene polymer. This is normally done in a conventional compounding or extruder unit, i.e. feeding the polymer powder or pellets in solid form into the inlet of the compounding unit, followed by mixing during and after melting mainly based on shear and elongational forces. Such homogenisation is known and is preferably carried out in a co-rotating or counter-rotating twin-screw extruder, or in an internal mixer such as a Banbury type mixer or in a single screw extruder, preferably a Buss co-kneader. For homogenisation of large volumes of polymer co-rotating or counter rotating twin-screw extruders are most preferred. For additional adjustment of the homogenisation action, the homogenisation unit can be equipped with an adjustable screw speed drive unit and/or a downstream gate valve for restriction of the polymer melt flow. Further downstream, but upstream the pelletizing unit, a separate melt pressurising unit is preferably used, such as a gear pump or a separate single screw extruder. If no separate melt pressurising unit is used, the melt is pressurised upstream the pelletizing unit in the main compounding/extruder unit. After pelletizing the polymer granules are cooled, normally with water and dried. For further information regarding homogenisation units reference is made to: "Plastics Extrusion Technology", pp. 3-18, edited by F. Hensen, Hanser Publishers 1997. The conditions of the homogenisation and more particularly the shear and elongational action, the temperature and the time of homogenisation are selected so as to achieve a predetermined degree of homogenisation.

In order to avoid excessive degradation of the polymer material the melt homogenisation/compounding is preferably carried out under an inert atmosphere. By "inert atmosphere" herein is meant an atmosphere having an oxygen level below 3 % by weight, preferably below 1 % by weight, and most preferably below 0,5 % by weight. As an example of a preferred inert atmosphere nitrogen may be mentioned.

The melt homogenisation/compounding is carried out at a sufficiently high temperature to bring the polymer to a melted condition during the homogenisation. To this end the temperature of the melt in the homogenisation device should be kept at about 240-350°C, more preferably about 240-320°C, and most preferably about 240-300°C.

The melt homogenisation/compounding is usually carried out to a predetermined or desired degree of homogenisation, depending on the intended application for the multimodal ethylene polymer.

Thus, for coloured or black pipe materials the homogeneity is defined by a rating determined by the number and size of white spots in the material. The definition of the homogeneity is preferably carried out in accordance with the method ISO 11420:1996(E) which is normally used for evaluation of carbon black agglomerates in polyolefin pipes. The desired rating for the homogeneity is 5 or less, preferably 4 or less, more preferably 3 or less, and still more preferably 2 or less.

With regard to wire & cable materials the homogeneity for black or coloured materials may be evaluated in the same way as described above for pipe materials, i.e. by the rating according to ISO 11420 :1996 (E) .

For uncoloured or natural pipe and wire & cable materials the homogeneity may be evaluated by the number and size of gels in the material. The evaluation is carried out in the following way.

A standard extruder equipped with a 25 mm diameter standard polyethylene compression screw (1:3.2) with a L:D ratio of 25:1 is used for extruding the polymer material to be evaluated. The barrel temperature is set from 190°C up to 280-320°C (zone 1 to 3) and the die temperature is set at 280-320°C depending on the polymer material to be evaluated. A tape of the polymer material is extruded from a flat die with an opening of 0.5 mm x 100 mm onto a 300 mm diameter temperature controlled steel roll with a temperature normally around 80°C. A support roll is positioned in such a way that the tape is in contact with the steel roll 60-70% of the circumference. The tape speed is controlled to 60 mm/sec by the steel roll speed. The final tape has a thickness of 70 ± 10 µm and a width of about 60 mm. The speed of the extruder screw, which is normally in the range of 25-30 rpm, is used to control the thickness of the tape. The number and size of the gels are measured on a 30 mm wide section in the middle of the tape in order to avoid surface effects. In total, an area of one square meter is measured and 1.5 kg material is normally sufficient for the test. The size (maximum size in any direction) of the gels is categorized in three classes: Large gels: > 0.7 mm; Medium sized gels: > 0.4 mm and ≤ 0.7 mm; Small gels: > 0.2 mm and ≤ 0.4 mm. The gel rating is given as the number of Small sized gels (X)/the number of Medium sized gels (Y)/the number of Large gels (Z), i.e. X/Y/Z. One square meter surface area of the tape is evaluated and the result per square meter is reported.

For uncoloured or natural pipe and wire & cable materials the gel rating, determined according to the above described method, should preferably be less than 200/100/10, more preferably less than 100/50/5, still more preferably less than 20/10/0, and most preferably less than 10/2/0, for the material to be considered as suitably homogeneous.

With regard to film materials the homogeneity is preferably also evaluated in terms of a gel rating as described above. For film materials the gel rating preferably is less than 20/3/0, more preferably less than 10/2/0, and most preferably less than 6/1/0.

Again, with regard to blow moulding materials the homogeneity is preferably evaluated in terms of a gel rating as described above. For blow moulding materials the gel rating preferably is less than 400/40/0/, more preferably less than 100/10/0, and most preferably less than 60/6/0.

When homogenising a multimodal ethylene polymer according to the present invention the particular application of the polymer should be considered as well as the required or desired level of homogenisation for that application. Having decided such a required or desired level of homogenisation the multimodal ethylene polymer material is then homogenised to the predetermined homogenisation level by melt homogenisation as described earlier.

As mentioned previously, the melt homogenisation of the present invention degrades the polymer material. This degrading of the polymer material manifests itself as a lowering of the processing and mechanical properties of the polymer material. As mentioned above, the present invention upgrades such a degraded polymer material by irradiating it with electron beam radiation to alleviate or eliminate the effect of polymer degradation by chain scission at the melt homogenisation. As indicated earlier when irradiating ethylene polymer materials they undergo molecular recombination to larger molecules.

In this connection it should be noted that at the present invention electron beam radiation as opposed to other kinds of radiation such as gamma radiation is used for irradiating the polymer material. This is because gamma radiation has several drawbacks such as a long irradiation time which leads to a low throughput in the process. Gamma irradiation is therefore not suited for large scale units. The long irradiation time needed also entails a risk of additional surface oxidation of the polymer material. Further, cobalt 60 is used as a source of gamma radiation and it is therefore not preferred for safety reasons. The problem of disposal of cobalt 60 means that gamma radiation is undesired for environmental reasons.

Preferably, the irradiation is carried out under an inert atmosphere such as nitrogen.

When the polymer is irradiated it is in the form of a solid, preferably in the form of pellets. Moreover the polymer forms a layer such as a layer of pellets which is exposed to the electron beam irradiation. The thickness of the polymer layer is preferably at most 45 mm, more preferably at most 35 mm when the polymer layer is irradiated from one side only. When the polymer layer is irradiated from both (opposed) sides its thickness is preferably at most 110 mm, more preferably at most 90 mm.

In order to determine the amount of irradiation needed for the upgrading that is desired or required, the extent of degradation of the polymer material should be determined after the homogenisation. As a measure of the degradation of the polymer its complex viscosity at 2.7 kPa complex modulus (η_{2.7 kPa} or eta 2.7kPa) may be used.

Determination of η_{2.7 kPa} is made according to ASTM D 4440-95a using a plate/plate melt rheometer, more particularly a Reologica Stress Tech Melt Rheometer HR. In principle, other rheometers could also be used, such as a Bohlin CS Melt Rheometer or Rheometrics RDA II or the like. Rheometers and their function have been described in "Encyclopedia of Polymer Science and Engineering", 2nd Ed., Vol. 14, pp. 492-509. The measurements are performed under oscillation between two 25 mm diameter plates. The gap between the plates is 1.8 mm. A 1.8 mm thick polymer sample is inserted between the plates. The measurement is performed in an inert atmosphere (nitrogen).

The sample is temperature conditioned during 2 min before the measurement is started. The measurement is performed at 190°C.

The level to which the degraded melt homogenised polymer material is to be upgraded is not critical, and in principle any upgrading of the polymer in terms of its complex viscosity at 2.7 kPa complex modulus above the level of the degraded melt homogenised polymer is within the scope of the present invention. However, with regard to the polymer in question and its intended application a certain minimum level of upgrading is often required or desired. Thus, it is often desired to upgrade the polymer to its initial complex viscosity at 2.7 kPa complex modulus. As is possible with the present invention, it is also desirable to upgrade the polymer material to an even higher complex viscosity at 2.7 kPa complex modulus than its initial value. This may be the case e.g. when the polymer material will subsequently be subjected to further degradation by homogenising or other degrading operations, e.g. during processing of the material to the final product. In such a case a previous upgrading to more than 100% of the initial complex viscosity of the polymer will compensate for the subsequent degradation.

In order to determine the required or desired level of upgrading it is thus often convenient to determine the initial complex viscosity at 2.7 kPa complex modulus of the polymer material. The initial complex viscosity at 2.7 kPa complex modulus of the polymer material is, however, very difficult if not impossible to determine in absolute terms, because the initial polymer material as it is discharged from the polymerisation reactor is too inhomogeneous for its complex viscosity to be determined as is.

As a relative measure of the initial complex viscosity at 2.7 kPa complex modulus of the polymer material may instead be taken the complex viscosity at 2.7 kPa complex modulus of a 250-300 g sample of the initial polymer material (without any carbon black but with 0.15 % pentaerythrityltetrakis(3-(3',5'-di-tert.butyl-4-hydroxyphenyl)-propionate, 0.15 % tris(2,4-di-t-butylphenyl)phosphite and 0.1 % calcium stearate) that has been homogenised in a Brabender kneader. To this end the sample is homogenised in the Brabender kneader for 10 minutes at 190°C chamber temperature at a compounding speed of 20 rpm.

With correct parameters as above the homogeneity of Brabender compounded samples are normally excellent without degradation of the polymer material due to: 1) the ability to keep the temperature low enough and relatively stable to a) achieve efficient homogenisation action, and b) avoid degradation (heat flux is controlled due to small dimensions - surface/volume ratio is large); and 2) the complete batch is treated in a similar manner.

The homogenisation and irradiation of the multimodal ethylene polymer is preferably carried out in connection with the preparation thereof, and more preferably it is carried out just after the pelletising and cooling of the polymer.

As described above the process according to the present invention may preferably be carried out as a continuous process. This is an advantage, especially when carrying out the process on an industrial scale.

In order to restore the processing properties and the mechanical properties of the polymer it is irradiated with ionizing low dose electron beam radiation, preferably in the range 0.1-20 kGy, more preferably in the range 0.1-10 kGy, still more preferably in the range 0.3-5 kGy, and most preferably in the range 0.5-4 kGy. The irradiation dose is inter alia dependent upon the type and amount of polymer irradiated and its degree of homogeneity, i.e. to what extent the preceding melt homogenisation has been carried out. The irradiation dose should be kept within the defined ranges, because if the irradiation dose is too high there may be a risk that the polymer is not possible to process/extrude due to high melt viscosity, alternatively at very high radiation dose, instead of being crosslinked is subjected to further, undesired chain scission.

When the multimodal ethylene polymer has been irradiated its η_{2,7 kPa} is determined as described above in order to establish that its processing properties and mechanical properties have been restored to a predetermined, desired level. As indicated earlier, this predetermined, desired level value of the η_{2.7 kPa} is inter alia dependent upon the type of polymer, the extent of the preceding melt homogenisation, and the intended application of the polymer. Generally, however, the desired, predetermined value of η_{2.7 kPa} should lie in the range 10-5000 kPa.s, preferably 50-3000 kPa.s and more preferably 100-2000 kPa.s.

In order to monitor and control the irradiation of the polymer the output of the irradiation device is preferably controlled by feeding the value of the determination of η_{2.7 kPa} after the melt homogenisation as an input signal to the irradiation device. Further, as a feedback the value of the determination of η_{2.7 kPa} after the irradiation is supplied to the irradiation device in order to adjust the irradation of the polymer, if needed. The details of such an arrangement for controlling the irradation of the polymer are obvious to the skilled person and need not be discussed here.

In order to further control the properties of the polymer the complex viscosity at a different complex modulus such as 210 kPa (η_{210 kPa} or eta210kPa) may be determined and the ratio between η_{2.7 kPa} and η_{210 kPa} (known as the Shear Thinning Index, SHI) be determined. The SHI is a measure of the broadness of the molecular weight distribution of the polymer. Also these properties are determined in accordance with ASTM D 4440-95a.

Having thus described the present invention it will now be illustrated by way of non-limiting examples of preferred embodiments in order to further facilitate the understanding of the invention.

In the examples the melt flow rate (MFR) is determined according to ISO 1133 at 190°C and is indicated in g/10 min. The MFR is an indication of the flowability of the polymer. The higher the melt flow rate, the lower the viscosity of the polymer. The MFR is determined at different loadings such as 5 kg (MFR₅; ISO 1133) or 21 kg (MFR₂₁; ISO 1133). The flow rate ratio is the ratio between MFR₂₁ and MFR₅ and is represented as FRR_{21/5}. The flow rate ratio is indicative of the molecular weight distribution and hence the processability of the polymer.

In the examples the compounding in the Brabender kneader was carried out in air, i.e. not under an inert atmosphere, whereas the compounding in co- or counter-rotating screw extruders was carried out under an inert atmosphere with an oxygen level below 0,5 % by weight.

Also, in the examples the irradiation was carried out at ambient temperature on a 30 mm thick pellet layer irradiating the layer from both sides with electron beam radiation of an energy of 9.6 MeV in two passes with half the total radiation dose in each pass.

Except where specifically stated in the examples, the polymer contained 0.1 % by weight of pentaerythrityl-tetrakis(3-(3',5'-di-tert.butyl-4-hydroxyphenyl)-propionate, 0.1 % by weight of tris(2,4-di-t-butylphenyl)phosphite, and 0.15 % by weight of calcium stearate as antioxidants and stabilisers.

### Example 1

A bimodal Ziegler-Natta ethylene polymer intended for the application as a polymer pipe was provided. The polymer had the following typical properties:
MFR₅ = 0.25 g/10 min;
MFR₂₁ = 9.5 g/10 min;
FRR_{21/5} = 38;
Density = 0.959 g/cm³.

The polymer was in the form of a dry blend, i.e. it contained polymer powder, 2.3 % by weight of carbon black and about 0.35 % by weight of antioxidants and stabilisers, but no other additives.

In order to obtain a measure of the initial complex viscosity at 2.7 kPa complex modulus of the polymer 1 kg polymer powder, 0.15 % by weight of pentaerythrityltetrakis(3-(3',5'-di-tert.butyl-4-hydroxyphenyl)-propionate, 0.15 % by weight of tris(2,4-di-t-butylphenyl)phosphite and 0.1 % calcium stearate were dry blended and a sample A of around 275 g of the dry blended mixture was then compounded in an oil-heated Brabender 350/Roller batch kneader for 10 minutes at 190°C and at 20 rpm. The initial complex viscosity was determined as described above with a Reologica Stress Tech rheometer at 190°C and the result is given in Table 1.

Another sample of the polymer containing 2.3 % by weight of carbon black was fed into a conventional non-intermeshing, counter-rotating twin screw extruder and subjected to tough homogenisation at 305°C until a rating according to ISO 11420:1996(E) of 3.5. Thereafter the polymer was pelleted and divided into four sub-samples B, C, D and E. Sub-sample B was left un-irradiated while sub-samples C, D and E were irradiated at ambient temperature in air at 9.6 MeV with 2.6 (= 2 x 1.3) kGy, 5 (= 2 x 2.5) kGy and 10 (= 2 x 5) kGy electron beam radiation, respectively.

The complex viscosity at 2.7 kPa, eta 2.7 kPa, complex modulus of samples B, C, D and E was then determined as described earlier with a Rheologica Stress Tech rheometer at 190°C. The results are given in Table 1.

Further, the complex viscosity at 210 kPa complex modulus, eta 210 kPa, and the ratio eta 2.7 kPa/eta 210 kPa which is called the Shear Thinning Index, SHI, and is a measure of the molecular weight distribution of the polymer, were determined for samples A, B, C, D and E. The results are given in Table 1.

As further parameters, the MFR₅, MFR₂, and FRR (=MFR₂₁/MFR₅) which is also a measure of the molecular weight distribution of the polymer, were determined for samples A, B, C, D and E. The results are given in Table 1.

As is evident from Table 1, the polymer is degraded by chain scission during the homogenisation. The lowering of the initial eta 2.7 kPa value of 272 kPa.s (sample A) to 208 kPa.s (sample B) is evidence hereof. When the degraded, homogenised polymer is irradiated it is upgraded as can be seen by the increased eta 2.7 kPa values for samples C, D and E.

It is also evident from the SHI and FRR values of Table 1 that irradiation of the homogenised polymer produces a broadening of the molecular weight distribution and hence improved processing properties.

**Table 1**

| Sample | Irradiation (kGy) | ISO-rating | eta 2.7 kPa (kPa.s) | eta 210 kPa (kPa.s) | SHI | MFR₅ | MFR₂₁ | FRR |
|---|---|---|---|---|---|---|---|---|
| A | 0 | | 272 | 2.86 | 95 | 0.24 | 9.38 | 39.1 |
| B | 0 | 3.5 | 208 | 3.83 | 54 | 0.3 | 11.43 | 37.8 |
| C | 2.6 | | 1639 | 2.02 | 812 | 0.06 | 4.43 | 72.7 |
| D | 5 | | 4340 | 4.06 | 1069 | 0.03 | 2.92 | 107.4 |
| E | 10 | | 4722 | 4.23 | 1116 | | 0.97 | |

### Example 2

Example 1 was repeated with the exception that the homogenisation was carried out under mild conditions at 290°C in a conventional co-rotating twin screw extruder.

The results are given in Table 2. Like in Example 1 it is evident from Table 2 that the homogenisation degrades the polymer and that the subsequent irradiation upgrades the polymer even beyond its initial status. The irradiation also broadens the molecular weight distribution of the polymer and hence improves its processing properties.

**Table 2**

| Sample | Irradiation (kGy) | ISO-rating | eta 2.7 kPa (kPa.s) | eta 210 kPa (kPa.s) | SHI | MFR₅ | MFR₂₁ | FRR |
|---|---|---|---|---|---|---|---|---|
| A | 0 | | 290 | 2.66 | 109 | 0.22 | 8.58 | 39 |
| B | 0 | 11 | 268 | 2.68 | 100 | 0.205 | 7.87 | 38.2 |
| C | 5 | | 1455 | 6.38 | 228 | 0.09 | 5.68 | 63.1 |
| D | 10 | | 5072 | 5.26 | 964 | | | |

### Example 3

Using pellets of sub-sample B of example 2 as starting material example 1 was repeated with the exception that the homogenisation was carried out in a Brabender kneader during 25 min at 115 rpm and a 180°C chamber temperature. Due to the high speed the heat generation was considerable resulting in a melt temperature of above 300°C.

The results are given in Table 3. Like in Example 2 it is evident from Table 3 that the homogenisation degrades the polymer and that the subsequent irradiation upgrades the polymer even beyond its initial status. The irradiation also broadens the molecular weight distribution of the polymer and hence improves its processing properties.

**Table 3**

| Sample | Irradiation (kGy) | ISO-rating | eta 2.7 kPa (kPa.s) | eta 210 kPa (kPa.s) | SHI | MFR₅ | MFR₂₁ | FRR |
|---|---|---|---|---|---|---|---|---|
| A | 0 | | 290 | 2.66 | 109 | 0.22 | 8.58 | 39 |
| B | 0 | 1.5 | 128 | 1.80 | 71 | 0.4 | 12.77 | 32 |
| C | 2.6 | | 358 | 1.67 | 215 | 0.28 | 10.62 | 38 |
| D | 5 | | 1017 | 1.89 | 538 | 0.19 | 9.08 | 47.7 |
| E | 10 | | | | | 0.07 | 5.48 | 77.6 |

### Example 4

Example 1 was repeated, but with another bimodal ethylene pipe polymer which had the following typical properties:
MFR₅ = 0.37 g/10 min;
MFR₂₁ = 9.2 g/10 min;
FRR_{21/5} = 25;
Density = 0.959 g/cm³.

The polymer was in the form of a dry blend, i.e. it contained polymer powder, 2.3 % by weight of carbon black and about 0.35 % by weight of antioxidants and stabilisers, but no other additives.

The polymer was divided into samples A, B, C and D and tested in the same way as the polymer in Example 1, except that the homogenisation was carried out under mild conditions at 285°C in a conventional co-rotating twin screw extruder.

The results which are given in Table 4 are similar to those in Example 2.

**Table 4**

| Sample | Irradiation (kGy) | ISO-rating | eta 2.7 kPa (kPa.s) | eta 210 kPa (kPa.s) | SHI | MFR₅ | MFR₂₁ | FRR |
|---|---|---|---|---|---|---|---|---|
| A | 0 | | 120 | 2.61 | 46 | 0.36 | 9.64 | 26.8 |
| B | 0 | 9.5 | 107 | 2.14 | 50 | 0.38 | 10.25 | 27.1 |
| C | 5 | | 685 | 4.72 | 145 | 0.2 | 7.9 | 40.1 |
| D | 10 | | 4722 | 3.81 | 1239 | 0.1 | 5.47 | 56.1 |

### Example 5

Example 1 was repeated, but with another bimodal ethylene polymer which had the following typical properties:
MFR₅ = 0.3 g/10 min;
MFR₂₁ = 10.5 g/10 min;
FRR_{21/5} = 35.0;
Density = 0.956 g/cm³.

The polymer was in the form of a dry blend, i.e. it contained polymer powder, 2.3 % by weight of carbon black and about 0.35 % by weight of antioxidants and stabilisers, but no other additives.

The polymer was divided into samples A, B, C, D and E and tested in the same way as the polymer in Example 1. The homogenisation was carried out in a Brabender kneader during 60 min at 115 rpm and a 180°C chamber temperature. Due to the high speed the heat generation was considerable resulting in a melt temperature of above 300°C.

The results are given in Table 5.

Like in Example 1 it is evident from Table 5 that the homogenisation degrades the polymer and that the subsequent irradiation upgrades the polymer up to and even beyond its initial status. The irradiation also broadens the molecular weight distribution of the polymer and hence improves its processing properties.

**Table 5**

| Sample | Irradiation (kGy) | ISO-rating | eta 2.7 kPa (kPa.s) | eta 210 kPa (kPa.s) | SHI | MFR₅ | MFR₂₁ | FRR |
|---|---|---|---|---|---|---|---|---|
| A | 0 | | 128.5 | 1.72 | 74,9 | 0.35 | 10.5 | 30.1 |
| B | 0 | <1.0 | 49.74 | 0.83 | 59.8 | 1.03 | 26.83 | 26.1 |
| C | 2.6 | | 91.76 | 0.73 | 125.7 | 0.87 | 24.67 | 28.5 |
| D | 5 | | 138.2 | 0.69 | 200 | 0.74 | 23.84 | 32.2 |
| E | 10 | | 539.9 | 0.75 | 722.2 | 0.38 | 16.62 | 43.5 |

### Example 6

Example 1 was repeated, but with another bimodal ethylene polymer which had the following typical properties:
MFR₅ = 0.52 g/10 min;
MFR₂₁ = 13 g/10 min;
FRR_{21/5} = 25;
Density = 0.956 g/cm³.

The polymer was in the form of a dry blend, i.e. it contained polymer powder, 2.3 % by weight of carbon black and about 0.35 % by weight of antioxidants and stabilisers, but no other additives.

The polymer was divided into samples A, B, C and D and tested in the same way as the polymer in Example 1. Also the homogenisation was carried out in the same way as in Example 1 under tough conditions at 305°C.

The results are given in Table 6.

Like in Example 1 it is evident from Table 6 that the homogenisation degrades the polymer and that the subsequent irradiation upgrades the polymer up to and even beyond its initial status. The irradiation also broadens the molecular weight distribution of the polymer and hence improves its processing properties.

**Table 6**

| Sample | Irradiation (kGy) | ISO-rating | eta 2.7 kPa (kPa.s) | eta 210 kPa (kPa.s) | SHI | MFR₅ | MFR₂₁ | FRR |
|---|---|---|---|---|---|---|---|---|
| A | 0 | | 98 | 2.23 | 44 | 0.52 | 13 | 25 |
| B | 0 | 4 | 78 | 2.78 | 28 | 0.59 | 15.55 | 26.5 |
| C | 5 | | 388 | 2.64 | 147 | 0.27 | 10.34 | 38.3 |
| D | 10 | | 2282 | 2.94 | 776 | 0.14 | 6.2 | 44.3 |

### Example 7

Example 1 was repeated, but with another bimodal ethylene polymer. This ethylene polymer is a polymer intended for the use as a cable jacketing. It had the following typical properties:
MFR₅ = 0.50 g/10 min;
MFR₂₁ = 16 g/10 min;
FRR_{21/5} = 32 ;
Density = 0.946 g/cm³.

The polymer which did not contain any carbon black was in the form of a base resin, i.e. it contained about 0.35 % by weight of antioxidants and stabilisers, but no other additives.
The polymer was divided into samples A, B, C, D and E. Like in the other examples, sample A was used as homogenisation reference and was homogenised in a Brabender kneader to a degree of homogenisation evaluated by the number and size of gels in the material as described previously above for natural wire and cable materials.

The other samples B, C, D and E were homogenised under very mild conditions (280°C) in the same way as in Example 2. The homogenisation was carried out to a gel rating of 529/218/30 as is evident from Table 7. Thereafter the samples B, C, D and E were subjected to different irradiation treatments. Sample B was left unirradiated, while samples C, D and E were irradiated with 5 kGy, 10 kGy, and 20 kGy electron beam radiation, respectively.

After irradiation eta2.7 kPa, eta210 kPa, SHI, MFR₅, MFR₂₁, and FRR were determined.

The results are given in Table 7.

Like in the previous examples, it is evident from Table 7 that the homogenisation degrades the polymer and the subsequent irradiation upgrades the polymer even beyond its initial status. The irradiation also broadens the molecular weight distribution of the polymer and hence improves its processing properties.

**Table 7**

| Sample | Irradiation (kGy) | Gel-rating | eta 2.7 kPa (kPa.s) | eta 210 kPa (kPa.s) | SHI | MFR₅ | MFR₂₁ | FRR |
|---|---|---|---|---|---|---|---|---|
| A | 0 | | 159 | 1.95 | 81.5 | 0.52 | 16.4 | 31.5 |
| B | 0 | 529/218/30 | 158 | 2.4 | 65.7 | 0.48 | 15.86 | 32.7 |
| C | 5 | | 700 | 2.04 | 343 | 0.24 | 11.55 | 48.4 |
| D | 10 | | 1797 | 2.12 | 848 | 0.09 | 6.74 | 76.7 |
| E | 20 | | 4064 | 1.99 | 2043 | | | |

## Claims

1. A process for radiation treatment of ethylene polymers, **characterised in**
providing a multimodal ethylene polymer having an initial complex viscosity value at 2.7 kPa complex modulus, η*_{(G*=2.7 kPa)};
melt homogenising/compounding the polymer thereby degrading the polymer;
determining the complex viscosity value at 2.7 kPa complex modulus of the homogenised polymer according to ASTM D 4440-95a;
irradiating the homogenised polymer as a solid with electron beam irradiation to increase its complex viscosity value at 2.7 kPa complex modulus to a predetermined percentage of the initial viscosity value.

2. A process according to claim 1, wherein the polymer is irradiated with a radiation dose of 0.1-20 kGy.

3. A process according to claim 2, wherein the polymer is irradiated with a radiation dose of 0.5-4 kGy.

4. A process according to anyone of claims 1-3, wherein the homogenised polymer is irradiated until its complex viscosity at 2.7 kPa complex modulus is about 100% of its initial viscosity value.

5. A process according to anyone of claims 1-3, wherein the homogenised polymer is irradiated until its complex viscosity at 2.7 kPa complex modulus is more than 100% of its initial viscosity value.

6. A process according to claim 1, wherein the homogenised polymer is irradiated to a complex viscosity at 2.7 kPa complex modulus of 10-5000 kPa.s.

7. A process according to any one of the preceding claims, wherein the irradiation is carried out under an inert atmosphere.

8. A process according to any one of the preceding claims, wherein the polymer is melt homogenised/compounded directly after the preparation of the polymer.

9. A process according to any one of the preceding claims, wherein the multimodal ethylene polymer is provided by mechanical blending of individual ethylene polymers.

10. A process according to claim 9, wherein at least one of the individual polymers is a recycled polymer.

11. A process according to any one of claims 1-10, wherein the polymer is irradiated after pelletising and cooling.

12. A process according to any one of the preceding claims, wherein the multimodal ethylene polymer is a bimodal ethylene polymer.

13. A process according to any one of the preceding claims, wherein the multimodal ethylene polymer comprises a low molecular weight (LMW) ethylene homopolymer fraction and a high molecular weight (HMW) ethylene copolymer fraction.

14. A process according to claim 13, wherein the LMW ethylene homopolymer fraction has a weight average molecular weight of 10 000-30 000 and the HMW ethylene copolymer fraction has a weight average molecular weight of at least 100 x 10³.

15. A process according to claim 13 or 14, wherein the ethylene copolymer of the HMW fraction is a copolymer of ethylene and a comonomer selected from the group consisting of 1-butene, 1-hexene, 4-methyl-1-pentene, and 1-octene.

## Patentansprüche

1. Verfahren für die Strahlungsbehandlung von Ethylen-Polymeren, **gekennzeichnet durch**
Bereitstellen eines multimodalen Ethylen-Polymers, das einen anfänglichen Komplexviskositätswert bei einem Komplexmodul von 2,7 kPa, η*_{(G* = 2,7 kPa)} hat;
Schmelzhomogenisieren/Schmelzverbinden des Polymers, um das Polymer abzubauen;
Bestimmen des Komplexviskositätswerts bei einem Komplexmodul von 2,7 kPa des homogenisierten Polymers gemäß ASTM D 4440-95a;
Bestrahlen des homogenisierten Polymers als einen Festkörper mit einem Elektronenstrahl, um seinen Komplexviskositätswert bei einem Komplexmodul von 2,7 kPa auf einen vorgegebenen Prozentsatz des anfänglichen Viskositätswerts zu erhöhen.

2. Verfahren nach Anspruch 1, bei dem das Polymer mit einer Strahlungsdosis von 0,1-20 kGy bestrahlt wird.

3. Verfahren nach Anspruch 2, bei dem das Polymer mit einer Strahlungsdosis von 0,5-4 kGy bestrahlt wird.

4. Verfahren nach einem der Ansprüche 1-3, bei dem das homogenisierte Polymer bestrahlt wird, bis seine Komplexviskosität bei einem Komplexmodul von 2,7 kPa etwa 100 % seines anfänglichen Viskositätswerts hat.

5. Verfahren nach einem der Ansprüche 1-3, bei dem das homogenisierte Polymer bestrahlt wird, bis seine Komplexviskosität bei einem Komplexmodul von 2,7 kPa mehr als 100 % seines anfänglichen Viskositätswerts beträgt.

6. Verfahren nach Anspruch 1, bei dem das homogenisierte Polymer bis zu einer Komplexviskosität bei einem Komplexmodul von 2,7 kPa von 10-5000 kPa · s bestrahlt wird.

7. Verfahren nach einem der vorhergehenden Ansprüche, bei dem die Bestrahlung in einer Edelgasatmosphäre ausgeführt wird.

8. Verfahren nach einem der vorhergehenden Ansprüche, bei dem das Polymer direkt nach der Herstellung des Polymers schmelzhomogenisiert/schmelzverbunden wird.

9. Verfahren nach einem der vorhergehenden Ansprüche, bei dem das multimodale Ethylen-Polymer durch mechanisches Mischen einzelner Ethylen-Polymere geschaffen wird.

10. Verfahren nach Anspruch 9, bei dem wenigstens eines der einzelnen Polymere ein wiedergewonnenes Polymer ist.

11. Verfahren nach einem der Ansprüche 1-10, bei dem das Polymer nach einer Pelletisierung und einer Kühlung bestrahlt wird.

12. Verfahren nach einem der vorhergehenden Ansprüche, bei dem das multimodale Ethylen-Polymer ein bimodales Ethylen-Polymer ist.

13. Verfahren nach einem der vorhergehenden Ansprüche, bei dem das multimodale Ethylen-Polymer einen Ethylen-Homopolymer-Anteil mit niedrigem Molekulargewicht (LMW-Ethylen-Homopolymer) und einen Ethylen-Copolymer-Anteil mit hohem Molekulargewicht (HMW-Ethylen-Copolymer) umfasst.

14. Verfahren nach Anspruch 13, bei dem der LMW-Ethylen-Homopolymer-Anteil ein durchschnittliches Molekulargewicht von 10000-30000 hat und der HMW-Ethylen-Copolymer-Anteil ein durchschnittliches Molekulargewicht von wenigstens 100 · 10³ hat.

15. Verfahren nach Anspruch 13 oder 14, bei dem das Ethylen-Copolymer des HMW-Anteils ein Copolymer aus Ethylen und einem Comonomer ist, das aus der Gruppe ausgewählt ist, die aus 1-Buten, 1-Hexen, 4-Methyl-1-Penten und 1-Okten besteht.

## Revendications

1. Procédé de radiothérapie de polymères d'éthylène, **caractérisé par** les étapes consistant à :
former un polymère d'éthylène multimodal ayant une valeur de viscosité complexe initiale à un module complexe de 2,7 kPa, η * _{(G*=2,7 kPa)} ;
homogénéiser/mélanger en fusion le polymère dégradant ainsi le polymère ;
déterminer la valeur de viscosité complexe à un module complexe de 2,7 kPa du polymère homogénéisé selon la norme ASTM D 4440-95a ;
irradier le polymère homogénéisé en tant que solide avec une irradiation par faisceau d'électrons pour augmenter sa valeur de viscosité complexe à un module complexe de 2,7 kPa à un pourcentage prédéterminé de la valeur de viscosité initiale.

2. Procédé selon la revendication 1, dans lequel le polymère est irradié avec une dose de rayonnement de 0,1 à 20 kGy.

3. Procédé selon la revendication 2, dans lequel le polymère est irradié avec une dose de rayonnement de 0,5 à 4 kGy.

4. Procédé selon l'une quelconque des revendications 1 à 3, dans lequel le polymère homogénéisé est irradié jusqu'à ce que sa viscosité complexe à un module complexe de 2,7 kPa soit d'environ 100 % de sa valeur de viscosité initiale.

5. Procédé selon l'une quelconque des revendications 1 à 3, dans lequel le polymère homogénéisé est irradié jusqu'à ce que sa viscosité complexe à un module complexe de 2,7 kPa soit de plus 100 % de sa valeur de viscosité initiale.

6. Procédé selon la revendication 1, dans lequel le polymère homogénéisé est irradié à une viscosité complexe à un module complexe de 2,7 kPa de 10 à 5 000 kPa.s.

7. Procédé selon l'une quelconque des revendications précédentes, dans lequel l'irradiation est réalisée dans une atmosphère inerte.

8. Procédé selon l'une quelconque des revendications précédentes, dans lequel le polymère est homogénéisé/mélangé en fusion directement après la préparation du polymère.

9. Procédé selon l'une quelconque des revendications précédentes, dans lequel le polymère d'éthylène multimodal est formé par mélange mécanique de polymères d'éthylène individuels.

10. Procédé selon la revendication 9, dans lequel au moins l'un des polymères individuels est un polymère recyclé.

11. Procédé selon l'une quelconque des revendications 1 à 10, dans lequel le polymère est irradié après la formation en pastille et le refroidissement.

12. Procédé selon l'une quelconque des revendications précédentes, dans lequel le polymère d'éthylène multimodal est un polymère d'éthylène bimodal.

13. Procédé selon l'une quelconque des revendications précédentes, dans lequel le polymère d'éthylène multimodal comprend une fraction homopolymère d'éthylène de faible masse moléculaire (LMW) et une fraction copolymère d'éthylène de masse moléculaire élevée (HMW).

14. Procédé selon la revendication 13, dans lequel la fraction homopolymère d'éthylène LMW a une masse moléculaire moyenne en masse de 10 000 à 30 000 et la fraction copolymère d'éthylène HMW a une masse moléculaire moyenne en masse d'au moins 100 x 10³.

15. Procédé selon la revendication 13 ou 14, dans lequel le copolymère d'éthylène de la fraction HMW est un copolymère d'éthylène et un comonomère choisi dans le groupe consistant en le 1-butène, le 1-hexène, le 4-méthyl-1-pentène, et le 1-octène.
